(19) Europäisches Patentamt
European Patent Office
Office européen des brevets

(11) EP 2 985 305 A1

(12) **EUROPEAN PATENT APPLICATION**
published in accordance with Art. 153(4) EPC

(43) Date of publication:
**17.02.2016 Bulletin 2016/07**

(21) Application number: **14782508.7**

(22) Date of filing: **26.03.2014**

(51) Int Cl.:
***C08G 69/40*** *(2006.01)* ***B60C 5/14*** *(2006.01)*

(86) International application number:
**PCT/JP2014/058683**

(87) International publication number:
**WO 2014/168011 (16.10.2014 Gazette 2014/42)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **09.04.2013 JP 2013081469**

(71) Applicant: **Mitsubishi Gas Chemical Company, Inc.**
**Tokyo 100-8324 (JP)**

(72) Inventors:
- **KATO, Tomonori**
  **Hiratsuka-shi**
  **Kanagawa 254-0016 (JP)**
- **KIKUCHI, Mayumi**
  **Hiratsuka-shi**
  **Kanagawa 254-0016 (JP)**
- **SATO, Kazuya**
  **Hiratsuka-shi**
  **Kanagawa 254-0016 (JP)**

(74) Representative: **Vossius & Partner**
**Patentanwälte Rechtsanwälte mbB**
**Siebertstrasse 3**
**81675 München (DE)**

# (54) INNER LINER FOR PNEUMATIC TIRE

(57) The present invention provides an inner liner for pneumatic tire, the inner liner being prepared by molding a resin composition containing a polyether polyamide (A) in which a diamine constituent unit thereof includes constituent units derived from a polyether diamine compound (a-1) represented by the general formula (1) and a xylylenediamine (a-2), and a dicarboxylic acid constituent unit thereof includes a constituent unit derived from an α,ω-linear aliphatic dicarboxylic acid (a-3) having from 4 to 20 carbon atoms.

EP 2 985 305 A1

## Description

Technical Field

The present invention relates to an inner liner for pneumatic tire.

Background Art

It is known that the deterioration of a framework rubber inside the tire, i.e., a so-called case rubber is frequently caused due to oxidation or thermal oxidation by oxygen transmission from the outside and the inside of the tire during the use. Then, as for the oxygen transmission by which the case rubber is deteriorated, in order to suppress the oxygen transmission from the tire inside, it is attempted to use an air insulation layer for an inner liner.

A butyl rubber, a halogenated butyl rubber, or the like is used for a main raw material of the inner liner as an air insulation layer. However, with respect to a rubber composition having such a rubber compounded therein, the inner liner was required to have a thickness of about 1 to 2 mm because of its low air insulation properties. This is because any material not only having excellent oxygen transmission resistance and high bending resistance but also making it possible to achieve thin gauge realization for the purpose of reducing the weight of an automobile tire following a social demand for energy conservation in the recent years has not been found yet.

Meanwhile, it is known that an ethylene-vinyl alcohol copolymer (hereinafter sometimes abbreviated as "EVOH") has excellent gas barrier properties. As for EVOH, its air transmission amount is one-hundredth or less of that of an inner liner rubber composition having a butyl-based rubber compounded therein, and therefore, even if its thickness is 50 μm or less, not only inner pressure holding properties can be greatly enhanced, but also it is possible to reduce the weight of a tire. In consequence, in order to improve the air transmissibility of a pneumatic tire, it is attempted to use EVOH for an inner liner for pneumatic tire (see JP-A-H6-40207).

Summary of Invention

Technical Problem

However, since this EVOH is greatly high in terms of elastic modulus as compared with rubbers which are usually used for tires, breakage or generation of a crack sometimes occurred due to deformation at the time of bending. For this reason, for example, in the case of using an inner liner composed of EVOH, the inner pressure holding properties before using the tire is highly improved; however, there was involved such a problem that the tire after the use, which has been subjected to bending deformation at the time of rolling of the tire, had the lowered inner pressure holding properties sometimes as compared with those before the use.

Then, an object of the present invention is to provide an inner liner for pneumatic tire which has excellent gas barrier properties against oxygen or the like and suppresses deterioration of framework rubber inside the tire attributable to oxygen transmission to enhance durability of the tire, and which at the same time, is free from breakage or generation of a crack attributable to deformation at the time of bending and has excellent flexibility.

Solution to Problem

The present inventors have found that the foregoing problem may be solved by using, as a molding material of an inner liner for pneumatic tire, a resin composition containing a polyether polyamide which includes a constituent unit derived from a polyether diamine compound having a specified structure as a diamine constituent unit, leading to accomplishment of the present invention.

Specifically, the present invention provides an inner liner for pneumatic tire as described below.

An inner liner for pneumatic tire, the inner liner being prepared by molding a resin composition containing a polyether polyamide (A) in which a diamine constituent unit thereof includes constituent units derived from a polyether diamine compound (a-1) represented by the following general formula (1) and a xylylenediamine (a-2), and a dicarboxylic acid constituent unit thereof includes a constituent unit derived from an α,ω-linear aliphatic dicarboxylic acid (a-3) having from 4 to 20 carbon atoms:

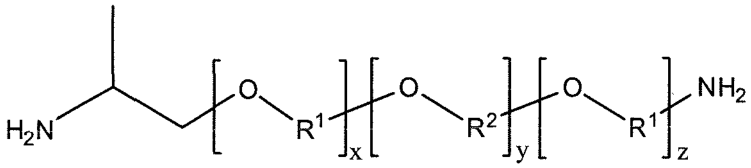

(1)

(In the formula, (x + z) represents 1 to 60; y represents 1 to 50; each $-OR^1$-independently represents $-OCH_2CH_2CH_2-$, $-OCH(CH_3)CH_2-$, or $-OCH_2CH(CH_3)-$; and $-OR^2-$ represents $-OCH_2CH_2CH_2CH_2-$ or $-OCH_2CH_2-$.)

Advantageous Effects of Invention

According to the present invention, an inner liner for pneumatic tire which has excellent gas barrier properties against oxygen or the like and suppresses deterioration of framework rubber inside the tire attributable to oxygen transmission to thereby enhance durability of the tire, and which at the same time, is free from breakage or generation of a crack attributable to deformation at the time of bending and has excellent flexibility.

Brief Description of Drawing

Fig. 1 is a cross-sectional view showing a mode of a pneumatic tire according to an embodiment of the present invention.

Description of Embodiments

[Resin composition]

The inner liner for pneumatic tire of the present invention is one prepared by molding a resin composition containing a polyether polyamide (A) in which a diamine constituent unit thereof includes constituent units derived from a polyether diamine compound (a-1) represented by the foregoing general formula (1) and a xylylenediamine (a-2), and a dicarboxylic acid constituent unit thereof includes a constituent unit derived from an $\alpha,\omega$-linear aliphatic dicarboxylic acid (a-3) having from 4 to 20 carbon atoms.

The resin composition may further contain other thermoplastic resin than the polyether polyamide (A) and other additives, if desired.

Incidentally, in the present invention, the resin composition is not limited to the composition containing the polyether polyamide (A) and other thermoplastic resin than the component (A) and other additives, but the case where the resin composition is composed of only the polyether polyamide (A) is also included.

A content of the polyether polyamide (A) is preferably 70 to 100% by mass, more preferably 80 to 100% by mass, still more preferably 90 to 100% by mass, and yet still more preferably 95 to 100% by mass relative to a total amount of the resin composition which is used in the present invention.

So long as the content of the polyether polyamide (A) is 70% by mass or more, an inner liner for pneumatic tire which is favorable in terms of all of gas barrier properties, bending resistance, moldability, and flexibility may be obtained.

[Polyether polyamide (A)]

As for the polyether polyamide (A) which is used in the present invention, a diamine constituent unit thereof includes constituent units derived from a polyether diamine compound (a-1) represented by the following general formula (1) and a xylylenediamine (a-2), and a dicarboxylic acid constituent unit thereof includes a constituent unit derived from an $\alpha,\omega$-linear aliphatic dicarboxylic acid (a-3) having from 4 to 20 carbon atoms.

In the present invention, by using the resin composition containing the polyether polyamide (A) as a molding material, an inner liner for pneumatic tire which is favorable in terms of all of gas barrier properties, bending resistance, moldability, and flexibility may be obtained.

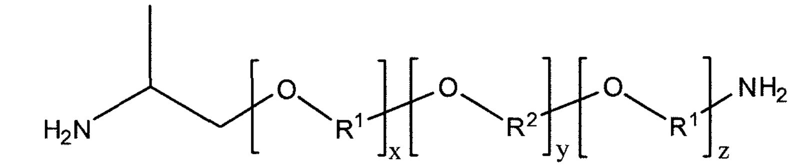

(1)

(In the formula (1), (x + z) represents 1 to 60; y represents 1 to 50; each $-OR^1-$ independently represents $-OCH_2CH_2CH_2-$, $-OCH(CH_3)CH_2-$, or $-OCH_2CH(CH_3)-$; and $-OR^2-$ represents $-OCH_2CH_2CH_2CH_2-$ or $-OCH_2CH_2-$.)

[Diamine constituent unit]

The diamine constituent unit that constitutes the polyether polyamide (A) includes constituent units derived from the polyether diamine compound (a-1) represented by the foregoing general formula (1) and the xylylenediamine (a-2).

A total content of the constituent units derived from the polyether diamine compound (a-1) and the xylylenediamine (a-2) in the diamine constituent unit of the polyether polyamide (A) is preferably 50 to 100% by mole, more preferably 70 to 100% by mole, still more preferably 80 to 100% by mole, and yet still more preferably 90 to 100% by mole.

<Polyether diamine compound (a-1)>

The diamine constituent unit that constitutes the polyether polyamide (A) includes a constituent unit derived from the polyether diamine compound (a-1) represented by the foregoing general formula (1).

In the foregoing general formula (1), (x + z) is 1 to 60, preferably 2 to 40, more preferably 2 to 30, still more preferably 2 to 20, and yet still more preferably 2 to 15.

In addition, y is 1 to 50, preferably 1 to 40, more preferably 1 to 30, and still more preferably 1 to 20.

In the case where the values of x, y, and z are more than the above-described ranges, the compatibility with an oligomer and a polymer each composed of the xylylenediamine and the dicarboxylic acid produced on the way of the reaction of melt polymerization is low, so that the polymerization reaction becomes hard to proceed.

In addition, in the foregoing general formula (1), each $-OR^1-$ independently represents $-OCH_2CH_2CH_2-$, $-OCH(CH_3)CH_2-$, or $-OCH_2CH(CH_3)-$.

A number average molecular weight of the polyether diamine compound (a-1) is preferably 176 to 7,000, more preferably 200 to 5,000, still more preferably 300 to 3,500, yet still more preferably 400 to 2,500, and even yet still more preferably 500 to 1,800.

So long as the average molecular weight of the polyether diamine compound falls within the foregoing range, a polymer that reveals functions as an elastomer, such as flexibility, rubber elasticity, etc., can be obtained, and an inner liner for pneumatic tire having favorable flexibility at the time of low temperature can be obtained.

From the viewpoint of making an inner liner for pneumatic tire which is favorable in terms of all of gas barrier properties, bending resistance, moldability, and flexibility, the polyether diamine compound (a-1) represented by the foregoing general formula (1) is specifically represented by the following general formula (1-1) or (1-2).

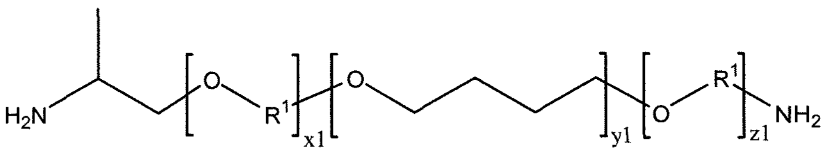

(1-1)

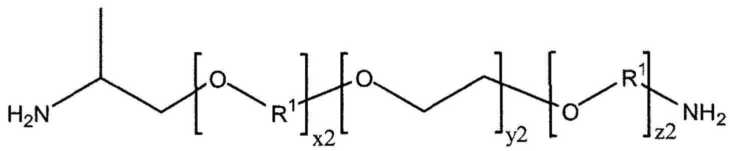

(1-2)

In the foregoing general formula (1-1), (x1 + z1) represents 1 to 60; y1 represents 1 to 50; and $-OR^1-$ represents $-OCH_2CH_2CH_2-$, $-OCH(CH_3)CH_2-$, or $-OCH_2CH(CH_3)-$.

In addition, in the foregoing general formula (1-2), (x2 + z2) represents 1 to 60; y2 represents 1 to 50; and $-OR^1-$ represents $-OCH_2CH_2CH_2-$, $-OCH(CH_3)CH_2-$, or $-OCH_2CH(CH_3)-$.

In the foregoing general formula (1-1), the numerical value of (x1 + z1) is 1 to 60, preferably 2 to 40, more

preferably 2 to 30, still more preferably 2 to 20, and yet still more preferably 2 to 15. In addition, the numerical value of y1 is 1 to 50, preferably 1 to 40, more preferably 1 to 30, and still more preferably 1 to 20.

In the foregoing general formula (1-2), the numerical value of (x2 + z2) is 1 to 60, preferably 2 to 40, more preferably 2 to 30, still more preferably 2 to 20, and yet still more preferably 2 to 15. In addition, the numerical value of y2 is 1 to 50, preferably 1 to 40, more preferably 1 to 30, and still more preferably 1 to 20.

A number average molecular weight of the polyether diamine compound represented by the foregoing general formula (1-1) is preferably 204 to 7,000, more preferably 250 to 5,000, still more preferably 300 to 3,500, yet still more preferably 400 to 2,500, and even yet still more preferably 500 to 1,800.

A number average molecular weight of the polyether diamine compound represented by the foregoing general formula (1-2) is preferably 176 to 5,700, more preferably 200 to 4,000, still more preferably 300 to 3,000, yet still more preferably 400 to 2,000, and even yet still more preferably 500 to 1,800.

Incidentally, these polyether diamine compounds (a-1) may be used solely or in combination of two or more kinds thereof.

<Xylylenediamine (a-2)>

The diamine constituent unit that constitutes the polyether polyamide (A) includes a constituent unit derived from the xylylenediamine (a-2).

The xylylenediamine (a-2) is preferably m-xylylenediamine, p-xylylenediamine, or a mixture thereof, more preferably m-xylylenediamine or a mixture of m-xylylenediamine and p-xylylenediamine, and still more preferably a mixture of m-xylylenediamine and p-xylylenediamine.

In the case where the xylylenediamine (a-2) is derived from m-xylylenediamine, the resulting polyether polyamide (A) is excellent in terms of mechanical properties and surface properties.

In the case where the xylylenediamine (a-2) is derived from a mixture of m-xylylenediamine and p-xylylenediamine, the resulting polyether polyamide (A) is excellent in terms of flexibility, crystallinity, melt moldability, molding processability, and toughness and furthermore, exhibits high heat resistance and a high elastic modulus.

Incidentally, these xylylenediamines (a-2) may be used solely or in combination of two or more kinds thereof.

In the case of using a mixture of m-xylylenediamine and p-xylylenediamine as the xylylenediamine (a-2), a proportion of p-xylylenediamine is preferably 90% by mole or less, more preferably 80% by mole or less, still more preferably 70% by mole or less, and yet still more preferably 5 to 70% by mole relative to a total amount of m-xylylenediamine and p-xylylenediamine.

So long as the proportion of p-xylylenediamine falls within the foregoing range, a melting point of the resulting polyether polyamide resin is not close to a decomposition temperature of the polyether polyamide, and hence, such is preferred.

From the viewpoint of making an inner liner for pneumatic tire which is favorable in terms of all of gas barrier properties, bending resistance, moldability, and flexibility, a proportion of the constituent unit derived from the xylylenediamine (a-2) in the diamine constituent unit of the polyether polyamide (A) is preferably 50 to 99% by mole, more preferably 70 to 97% by mole, still more preferably 75 to 95% by mole, and yet still more preferably 80 to 95% by mole.

<Other diamine compounds>

As described above, though the diamine constituent unit that constitutes the polyether polyamide (A) includes the constituent units derived from the polyether diamine compound (a-1) represented by the foregoing general formula (1) and the xylylenediamine (a-2), it may include a constituent unit derived from other diamine compound so long as the effects of the present invention are not hindered.

As the diamine compound which may constitute a diamine constituent unit other than the polyether diamine compound (a-1) and the xylylenediamine (a-2), though there can be exemplified aliphatic diamines, such as tetramethylenediamine, pentamethylenediamine, 2-methylpentanediamine, hexamethylenediamine, heptamethylenediamine, octamethylenediamine, nonamethylenediamine, decamethylenediamine, dodecamethylenediamine, 2,2,4-trimethyl-hexamethylenediamine, 2,4,4-trimethylhexamethylenediamine, etc.; alicyclic diamines, such as 1,3-bis(aminomethyl)cyclohexane, 1,4-bis(aminomethyl)cyclohexane, 1,3-diaminocyclohexane, 1,4-diaminocyclohexane, bis(4-aminocyclohexyl)methane, 2,2-bis(4-aminocyclohexyl)propane, bis(aminomethyl)decalin, bis(aminomethyl)tricyclodecane, etc.; diamines having an aromatic ring, such as bis(4-aminophenyl) ether, p-phenylenediamine, bis(aminomethyl)naphthalene, etc.; and the like, the diamine compound is not limited to these compounds.

The other diamine compounds may be used solely or in combination of two or more kinds thereof.

[Dicarboxylic acid constituent unit]

In the polyether polyamide (A), a dicarboxylic acid constituent unit thereof includes a constituent unit derived from an $\alpha,\omega$-linear aliphatic dicarboxylic acid (a-3) having from 4 to 20 carbon atoms.
A content of the constituent unit derived from an $\alpha,\omega$-linear aliphatic dicarboxylic acid (a-3) having from 4 to 20 carbon atoms in the dicarboxylic acid constituent unit of the polyether polyamide (A) is preferably 50 to 100% by mole, and more preferably 70 to 100% by mole.
Examples of the $\alpha,\omega$-linear aliphatic dicarboxylic acid (a-3) having from 4 to 20 carbon atoms include succinic acid, glutaric acid, adipic acid, pimelic acid, suberic acid, azelaic acid, sebacic acid, 1,10-decanedicarboxylic acid, 1,11-undecanedicarboxylic acid, 1,12-dodecanedicarboxylic acid, and the like.
Of these, adipic acid and sebacic acid are more preferred from the viewpoints of crystallinity and high elasticity, and adipic acid is still more preferred from the viewpoint of gas barrier properties in addition to the crystallinity and high elasticity. These carboxylic acids may be used solely or in combination of two or more kinds thereof.
As described above, though the dicarboxylic acid constituent unit that constitutes the polyethylene polyamide (A) includes the constituent unit derived from the $\alpha,\omega$-linear aliphatic dicarboxylic acid (a-3) having from 4 to 20 carbon atoms, it may also include a constituent unit derived from other dicarboxylic acid so long as the effects of the present invention are not hindered.
As the dicarboxylic acid which may constitute the dicarboxylic acid constituent unit other than the $\alpha,\omega$-linear aliphatic dicarboxylic acid (a-3) having from 4 to 20 carbon atoms, there can be exemplified aliphatic dicarboxylic acids, such as oxalic acid, malonic acid, etc.; aromatic dicarboxylic acids, such as terephthalic acid, isophthalic acid, 2,6-naphthalenedicarboxylic acid, etc.; and the like. However, it should not be construed that the dicarboxylic acid is limited thereto.
In the case of using a mixture of the $\alpha,\omega$-linear aliphatic dicarboxylic acid (a-3) having from 4 to 20 carbon atoms and isophthalic acid as the dicarboxylic acid component, the heat resistance and molding processability of the polyether polyamide (A) can be enhanced.
A molar ratio of the $\alpha,\omega$-linear aliphatic dicarboxylic acid (a-3) having from 4 to 20 carbon atoms and isophthalic acid ($\alpha,\omega$-linear aliphatic dicarboxylic acid (a-3) having from 4 to 20 carbon atoms)/(isophthalic acid)) is preferably from 50/50 to 99/1, and more preferably from 70/30 to 95/5.

[Physical properties of polyether polyamide (A)]

When the polyether polyamide (A) contains, as a hard segment, a highly crystalline polyamide block formed of the xylylenediamine (a-2) and the $\alpha,\omega$-linear aliphatic dicarboxylic acid (a-3) having from 4 to 20 carbon atoms and, as a soft segment, a polyether block derived from the polyether diamine compound (a-1), the resulting inner liner for pneumatic tire can be made favorable in terms of all of gas barrier properties, bending resistance, moldability, and flexibility.
A relative viscosity of the polyether polyamide (A) is preferably in the range of 1.1 to 3.0, more preferably in the range of 1.1 to 2.9, and still more preferably in the range of 1.1 to 2.8.
Incidentally, the relative viscosity of the polyether polyamide (A) is a ratio of a fall time (t) obtained by dissolving 0.2 g of a sample in 20 mL of 96% by mass sulfuric acid and measuring the resulting solution at 25°C by a Cannon-Fenske viscometer to a fall time (to) of the 96% by mass sulfuric acid itself as similarly measured and is expressed according to the following equation.

$$\text{Relative viscosity} = t/t_0$$

A melting point (Tm) of the polyether polyamide (A) is preferably in the range of 170 to 270°C, more preferably in the range of 175 to 270°C, still more preferably in the range of 180 to 270°C, and yet still more preferably in the range of 185 to 260°C from the viewpoints of heat resistance and melt moldability.
Incidentally, the melting point of the polyether polyamide (A) is measured by using a differential scanning calorimeter, and specifically, the melting point means a value measured by a method described in the Examples.
A number average molecular weight (Mn) of the polyether polyamide (A) is preferably 1,000 to 50,000, more preferably 3,000 to 30,000, still more preferably 5,000 to 25,000, and yet still more preferably 7,000 to 22,000.
Incidentally, the number average molecular weight (Mn) of the polyether polyamide (A) means a value measured by a method described in the Examples.

[Production of polyether polyamide (A)]

The production of the polyether polyamide (A) is not particularly limited but can be carried out by an arbitrary method under an arbitrary polymerization condition.

The polyether polyamide (A) can be, for example, produced by a method in which a salt composed of the diamine component (the diamine including the polyether diamine compound (a-1) and the xylylenediamine (a-2), and the like) and the dicarboxylic acid component (the dicarboxylic acid including the α,ω-linear aliphatic dicarboxylic acid (a-3) having from 4 to 20 carbon atoms and the like) is subjected to temperature rise in a pressurized state in the presence of water, and polymerization is carried out in a molten state while removing the added water and condensed water.

In addition, the polyether polyamide (A) can also be produced by a method in which the diamine component (the diamine including the polyether diamine compound (a-1) and the xylylenediamine (a-2), and the like) is added directly to the dicarboxylic acid component (the dicarboxylic acid including the α,ω-linear aliphatic dicarboxylic acid (a-3) having from 4 to 20 carbon atoms and the like) in a molten state, and polycondensation is carried out at atmospheric pressure. In this case, in order to keep the reaction system in a uniform liquid state, the diamine component is continuously added to the dicarboxylic acid component, and during that period, the polycondensation is advanced while subjecting the reaction system to temperature rise such that the reaction temperature does not fall below the melting point of each of the formed oligoamide and polyamide resins.

On that occasion, among the diamine components, the polyether diamine compound (a-1) may be previously charged together with the dicarboxylic acid component in a reaction tank. By previously charging the polyether diamine compound (a-1) in a reaction tank, thermal deterioration of the polyether diamine compound (a-1) can be suppressed. In that case, in order to keep the reaction system in a uniform liquid state, the diamine component other than the polyether diamine compound (a-1) is continuously added to the dicarboxylic acid component, too, and during that period, the polycondensation is advanced while subjecting the reaction system to temperature rise such that the reaction temperature does not fall below the melting point of each of the formed oligoamide and polyamide resins.

A molar ratio of the diamine component (the diamine including the polyether diamine compound (a-1) and the xylylenediamine (a-2), and the like) and the dicarboxylic acid component (the dicarboxylic acid including the α,ω-linear aliphatic dicarboxylic acid (a-3) having from 4 to 20 carbon atoms and the like) ((diamine component)/(dicarboxylic acid component)) is preferably 0.9 to 1.1, more preferably 0.93 to 1.07, still more preferably 0.95 to 1.05, and yet still more preferably 0.97 to 1.02. So long as the molar ratio falls within the foregoing range, an increase of the molecular weight is easily advanced.

A polymerization temperature is preferably from 150 to 300°C, more preferably from 160 to 280°C, and still more preferably from 170 to 270°C. So long as the polymerization temperature falls within the foregoing temperature range, the polymerization reaction is rapidly advanced. In addition, since the monomers and the oligomer or polymer, etc. on the way of the polymerization hardly causes thermal decomposition, properties of the resulting polyether polyamide become favorable.

A polymerization time is preferably from 1 to 5 hours after starting to add dropwise the diamine component. By allowing the polymerization time to fall within the foregoing range, the molecular weight of the polyether polyamide (A) can be sufficiently increased, and furthermore, coloration of the resulting polyether polyamide can be suppressed.

It is preferred that the polyether polyamide (A) is produced by a melt polycondensation (melt polymerization) method by the addition of a phosphorus atom-containing compound. As the melt polycondensation method, a method in which the diamine component is added dropwise to the molten dicarboxylic acid component at atmospheric pressure, and polymerization is carried out in a molten state while removing the condensed water. Furthermore, among the diamine components, a method of previously charging the polyether diamine compound (a-1) together with the dicarboxylic acid in a reaction tank and melting, adding dropwise the xylylenediamine component in the reaction tank, and then carrying out polymerization in a molten state while removing the condensed water is more preferred.

A phosphorus atom-containing compound can be added in the polycondensation system of the polyether polyamide (A) within the range where its properties are not hindered.

Examples of the phosphorus atom-containing compound which can be added include dimethylphosphinic acid, phenylmethylphosphinic acid, hypophosphorous acid, sodium hypophosphite, calcium hypophosphite, potassium hypophosphite, lithium hypophosphite, ethyl hypophosphite, phenylphosphonous acid, sodium phenylphosphonoate, potassium phenylphosphonoate, lithium phenylphosphonoate, ethyl phenylphosphonoate, phenylphosphonic acid, ethylphosphonic acid, sodium phenylphosphonate, potassium phenylphosphonate, lithium phenylphosphonate, diethyl phenylphosphonate, sodium ethylphosphonate, potassium ethylphosphonate, phosphorous acid, sodium hydrogen phosphite, sodium phosphite, triethyl phosphite, triphenyl phosphite, pyrrophosphorous acid, and the like.

Of these, hypophosphorous acid metal salts, such as sodium hypophosphite, potassium hypophosphite, lithium hypophosphite, etc., are preferred, with sodium hypophosphite being more preferred, from the viewpoint that they are high in terms of an effect for promoting the amidation reaction and also excellent in terms of a coloration preventing effect.

Incidentally, the phosphorus atom-containing compound which can be used in the present invention is not

limited to these compounds.

An addition amount of the phosphorus atom-containing compound which is added in the polycondensation system is preferably from 1 to 1,000 ppm, more preferably from 5 to 1,000 ppm, and still more preferably from 10 to 1,000 ppm as converted into a phosphorus atom concentration in the polyether polyamide (A) from the viewpoints of favorable appearance and molding processability.

In addition, it is preferred to add an alkali metal compound in combination with the phosphorus atom-containing compound in the polycondensation system of the polyether polyamide (A).

In addition thereto, in order to prevent the coloration of the polymer during the polycondensation, it is necessary to allow a sufficient amount of the phosphorus atom-containing compound to exist; however, under certain circumstances, there is a concern that gelation of the polymer is caused. For that reason, in order to also adjust an amidation reaction rate, it is preferred to allow an alkali metal compound to coexist.

The alkali metal compound is preferably an alkali metal hydroxide or an alkali metal acetate.

Specifically, examples of the alkali metal compound include lithium hydroxide, sodium hydroxide, potassium hydroxide, rubidium hydroxide, cesium hydroxide, lithium acetate, sodium acetate, potassium acetate, rubidium acetate, cesium acetate, and the like.

In the case of adding the alkali metal compound in the polycondensation system, a value obtained by dividing the molar number of the compound by the molar number of the phosphorus atom-containing compound is preferably from 0.50 to 1.00, more preferably from 0.55 to 0.95, and still more preferably from 0.60 to 0.90.

When the subject value falls within the foregoing range, an effect for appropriately suppressing the promotion of the amidation reaction of the phosphorus atom-containing compound is brought, and the occurrence of the matter that the polycondensation reaction rate is lowered due to excessive suppression of the reaction, so that thermal history of the polymer increases, thereby causing an increase of gelation of the polymer can be avoided.

In addition, in the case of using sebacic acid as the dicarboxylic acid, its sodium atom concentration is preferably from 1 to 500 ppm, more preferably from 10 to 300 ppm, and still more preferably from 20 to 200 ppm.

When the sodium atom concentration falls within the foregoing range, the reactivity on the occasion of synthesizing the polyether polyamide is good, the molecular weight can be easily controlled to an appropriate range, and furthermore, the use amount of the alkali metal compound which is compounded for the purpose of adjusting the amidation reaction rate as described above can be made small. In addition, an increase of the viscosity on the occasion of melt molding the polyether polyamide can be suppressed, and not only the moldability becomes favorable, but also the generation of scorch at the time of molding processing can be suppressed, and therefore, the quality of the resulting inner line for pneumatic tire tends to be enhanced.

The polyether polyamide (A) obtained by melt polycondensation is once taken out from the polymerization system, pelletized, and then dried for use. In addition, for the purpose of further increasing the degree of polymerization of the polyether polyamide (A), solid phase polymerization of the polyether polyamide (A) may also be carried out.

As a heating apparatus which is used for drying and solid phase polymerization, though known apparatuses can be used, a continuous heat drying apparatus, a rotary drum type heating apparatus called, for example, a tumble dryer, a conical dryer, a rotary dryer, etc., or a rotary drum type heating apparatus equipped with a rotary blade in the inside thereof, called a Nauta mixer, can be suitably used; but the method and the apparatus are not limited to these, and known methods and known apparatuses can be used.

[Thermoplastic resin other than the component (A)]

The resin composition which is used in the present invention may further contain a thermoplastic resin other than the component (A) to an extent such that the effects of the present invention are not hindered.

When the resin composition contains the thermoplastic resin, mechanical properties and the like of the resulting inner liner for pneumatic tire can be enhanced.

However, the resin composition which is used in the present invention contains the polyether polyamide (A), and therefore, even if it does not contain the thermoplastic resin other than the component (A), an inner liner for pneumatic tire having sufficiently excellent properties can be obtained.

In addition, if the content of the thermoplastic resin other than the component (A) is excessively large, there may be the case where the compatibility with the component (A) is lowered, so that the mechanical properties and surface properties which the polyether polyamide (A) has are hindered.

From the above-described viewpoints, the content of the thermoplastic resin other than the polyether polyamide (A), which is contained in the resin composition used in the present invention, is preferably 0 to 30% by mass, more preferably 0 to 10% by mass, and still more preferably 0 to 5% by mass.

Examples of the thermoplastic resin other than the component (A), which is contained in the resin composition, include polyamide resins, polyester resins, polyolefin resins, acrylic resins, and the like.

Examples of the polyamide resin include polycaproamide (nylon 6), polyundecanamide (nylon 11), polydodecanamide (nylon 12), polytetramethylene adipamide (nylon 46), polyhexamethylene adipamide (nylon 66), polyhexamethylene azelamide (nylon 69), polyhexamethylene sebacamide (nylon 610), polyundecamethylene adipamide (nylon 116), polyhexamethylene dodecamide (nylon 612), polyhexamethylene terephthalamide (nylon 6T (T represents a terephthalic acid component unit; hereinafter the same)), polyhexamethylene isophthalamide (nylon 6I (I represents an isophthalic acid component unit; hereinafter the same)), polyhexamethylene terephthalisophthalamide (nylon 6TI), polyheptamethylene terephthalamide (nylon 9T), poly-m-xylylene adipamide (nylon MXD6 (MXD represents an m-xylylenediamine component unit; hereinafter the same)), poly-m-xylylene sebacamide (nylon MXD10), poly-p-xylylene sebacamide (nylon PXD10 (PXD represents a p-xylylenediamine component unit)), a polyamide resin obtained by polycondensation of 1,3- or 1,4-bis(aminomethyl)cyclohexane and adipic acid (nylon 1,3-/1,4-BAC6 (BAC represents a bis(aminomethyl)cyclohexane component unit), and copolymerized amides thereof, and the like.

Examples of the polyester resin include a polyethylene terephthalate resin, a polyethylene terephthalate-isophthalate copolymer resin, a polyethylene-1,4-cyclohexane dimethylene-terephthalate copolymer resin, a polyethylene-2,6-naphthalene dicarboxylate resin, a polyethylene-2,6-naphthalene dicarboxylate-terephthalate copolymer resin, a polyethylene-terephthalate-4,4'-biphenyl dicarboxylate copolymer resin, a poly-1,3-propylene-terephthalate resin, a polybutylene terephthalate resin, a polybutylene-2,6-naphthalene dicarboxylate resin, and the like.

Of these, a polyethylene terephthalate resin, a polyethylene terephthalate-isophthalate copolymer resin, a polybutylene terephthalate resin, and a polyethylene-2,6-naphthalene dicarboxylate resin are preferred.

Examples of the polyolefin resin include polyethylenes, such as low density polyethylene (LDPE), linear low density polyethylene (LLDPE), very low density polyethylene (VLDPE), medium density polyethylene (MDPE), high density polyethylene (HDPE), etc.; polypropylenes, such as a propylene homopolymer, a random or block copolymer of propylene and ethylene or an $\alpha$-olefin, etc.; mixtures of two or more kinds thereof; and the like.

Incidentally, a majority of the polyethylenes is a copolymer of ethylene and an $\alpha$-olefin.

In addition, the polyolefin resin includes a modified polyolefin resin modified with a small amount of a carboxyl group-containing monomer, such as acrylic acid, maleic acid, methacrylic acid, maleic anhydride, fumaric acid, itaconic acid, etc. The modification is in general carried out by means of copolymerization or graft modification.

Examples of the acrylic resin include a homopolymer of a (meth)acrylic acid ester, a copolymer of two or more different kinds of (meth)acrylic acid ester monomers, and a copolymer of a (meth)acrylic acid ester and other monomer.

Specifically, examples thereof include (meth)acrylic resins composed of a homo- or copolymer including a (meth)acrylic acid ester, such as polymethyl (meth)acrylate, polyethyl (meth)acrylate, polypropyl (meth)acrylate, polybutyl (meth)acrylate, a methyl (meth)acrylate-butyl (meth)acrylate copolymer, an ethyl (meth)acrylate-butyl (meth)acrylate copolymer, an ethylene-methyl (meth)acrylate copolymer, a styrene-methyl (meth)acrylate copolymer, etc.

[Other additives]

The resin composition which is used in the present invention may contain other additives within the range where the effects of the present invention are not hindered.

Examples of the other additives include a vulcanizer, a vulcanization accelerator, a vulcanization retarder, an antioxidant, an anti-aging agent, an ultraviolet absorber, a lubricant, a plasticizer, a flame retarder, a filler, a reinforcing agent, a tackifier, and the like; however, it should not be construed that the other additives are limited thereto.

A content of the above-described other additives which are contained in the resin composition to be used in the present invention is not particularly limited within the range where the effects of the present invention are not hindered; however, it is preferably 0 to 10 parts by mass, and more preferably 0 to 5 parts by mass based on 100 parts by mass of the above-described polyether polyamide (A).

[Production method of inner liner for pneumatic tire]

As for a production method of the inner liner for pneumatic tire of the present invention, the inner liner for pneumatic tire can be produced by a known method.

For example, there is exemplified a method in which a resin composition of the above-described polyether polyamide (A) and other resins than the above-described component (A) and other additives to be added as the need arises is prepared, the resin composition is kneaded by a screw extruder, a roll, or the like, and an inner liner for pneumatic tire having an arbitrary thickness is obtained by means of a known molding method.

Examples of the method of preparing the resin composition include a method of mixing by a tumbler, a mixer, a blender, or the like.

Examples of the molding method include injection molding, extrusion molding, compression molding, calendar molding, and the like.

As for a temperature condition at the time of molding, from the viewpoint of preventing change of properties of the polyether polyamide (A), in the case where a melting point of the polyether polyamide (A) is defined as Tm (°C), the

temperature is preferably Tm (°C) to (Tm + 80 (°C)), and more preferably Tm (°C) to (Tm + 60 (°C)).

[Structure of pneumatic tire]

Fig. 1 is a partial cross-sectional view along the tread width direction and the tire radial direction showing an example of a pneumatic tire 7.

This pneumatic tire 7 is constructed of a bead core 1, a carcass 2 wound around the periphery of the bead core 1, an inner line 3 arranged in the inside in the tire radial direction of the carcass 2, a belt part having two sheets of belt layers 4 arranged in the outside in the tire radial direction of a crown part of the carcass 2, a tread part 5 arranged in the outside in the tire radial direction of the belt part, and a sidewall part 6.

This inner liner 3 is composed of one prepared by molding the above-described resin composition.

[Production method of pneumatic tire]

Next, a production method of the above-described pneumatic tire 7 is explained.

First of all, a laminate as the inner liner 3 is wound on the peripheral surface of a tire molding drum. Subsequently, a rubber member that constructs the carcass 2 is wound on this inner liner 3; a rubber member that constructs the belt layers 4, a rubber member that constructs the tread part 5, a rubber member that constructs the sidewall part 6, and the like are further wound and lapped thereon; and the drum is then taken away, thereby preparing a green tire.

This green tire is heated and vulcanized at a temperature of usually 120°C or higher, preferably 125 to 200°C, and more preferably 130 to 180°C, thereby obtaining the pneumatic tire 7.

In the inner liner for pneumatic tire of the present invention, even if the thickness is made thin, sufficient durability can be kept, and therefore, the gas barrier properties, the bending resistance, and the like can be made favorable, and it is possible to contemplate to reduce the weight.

The thickness of the inner liner for pneumatic tire of the present invention is preferably 10 to 1,000 μm, more preferably 30 to 900 μm, and still more preferably 50 to 800 μm from the viewpoint of keeping the gas barrier properties, the bending resistance, and the like favorable and also from the viewpoint of reducing the weight.

A rate of tensile elongation at break of the inner liner for pneumatic tire of the present invention (measurement temperature: 23°C, humidity: 50% RH (relative humidity)) is preferably 100% or more, more preferably 200% or more, still more preferably 250% or more, and yet still more preferably 300% or more from the viewpoint of flexibility.

A tensile elastic modulus of the inner liner for pneumatic tire of the present invention (measurement temperature: 23°C, humidity: 50% RH) is preferably 100 MPa or more, more preferably 200 MPa or more, still more preferably 300 MPa or more, yet still more preferably 400 MPa or more, and even yet still more preferably 500 MPa or more from the viewpoints of flexibility and mechanical strength.

The tensile elastic modulus and the rate of tensile elongation at break are measured in conformity with JIS K7161.

Examples

The present invention is hereunder described in more detail by reference to the Examples, but it should not be construed that the present invention is limited thereto. Incidentally, in the present Examples, various measurements were carried out by the following methods.

(1) Relative viscosity (ηr)

0.2 g of each of polyether polyamides or polyamides obtained in the following Production Examples was accurately weighed, and the polyether polyamide or polyamide was added to 20 mL of 96% by mass sulfuric acid and completely dissolved therein at 20 to 30°C with stirring, thereby preparing a solution. Thereafter, 5 mL of the solution was rapidly taken into a Cannon-Fenske viscometer, allowed to stand in a thermostat at 25°C for 10 minutes, and then measured for a fall time (t). In addition, a fall time (to) of the 96% by mass sulfuric acid itself was similarly measured. A relative viscosity was calculated from t and to according to the following equation (1).

$$\text{Equation (1): Relative viscosity} = t/t_0$$

(2) Number average molecular weight (Mn)

Each of polyether polyamides or polyamides obtained in the following Production Examples was dissolved in

a mixed solvent of phenol and ethanol (phenol/ethanol = 4/1 (volume ratio)) and a benzyl alcohol solvent, respectively, and a terminal carboxyl group concentration and a terminal amino group concentration were determined by means of neutralization titration with hydrochloric acid and a sodium hydroxide aqueous solution, respectively. A number average molecular weight (Mn) was determined from quantitative values of the terminal amino group concentration and the terminal carboxyl group concentration according to the following equation (2).

$$\text{Equation (2): Number average molecular weight} = 2 \times 1{,}000{,}000/([NH_2] + [COOH])$$

$[NH_2]$: Terminal amino group concentration (μeq/g)
[COOH]: Terminal carboxyl group concentration (μeq/g)

(3) Differential scanning calorimetry (glass transition temperature, crystallization temperature, and melting point)

The measurement of the differential scanning calorimetry was carried out in conformity with JIS K7121 and K7122. By using a differential scanning calorimeter (a trade name: "DSC-60", manufactured by Shimadzu Corporation), each of polyether polyamides or polyamides obtained in the following Production Examples was charged in a DSC measurement pan and subjected to a pre-treatment of raising the temperature to 300°C in a nitrogen atmosphere at a temperature rise rate of 10°C/min and rapid cooling, followed by performing the measurement. As for the measurement condition, the temperature was raised at a rate of 10°C/min, and after keeping at 300°C for 5 minutes, the temperature was dropped to 100°C at a rate of -5°C/min, thereby determining a glass transition temperature Tg, a crystallization temperature Tch, and a melting point Tm of each of the polyether polyamides or polyamides obtained in the following Production Examples.

(Production Example 1) Production of polyether polyamide A1

In a reaction vessel having a capacity of about 3 L and equipped with a stirrer, a nitrogen gas inlet, and a condensed water discharge port, 748.33 g of sebacic acid, 0.6565 g of sodium hypophosphite monohydrate, and 0.4572 g of sodium acetate were charged, and after thoroughly purging the inside of the vessel with nitrogen, the added components were melted at 170°C while further feeding a nitrogen gas at a rate of 20 mL/min into the vessel. A mixed liquid of 335.12 g of m-xylylenediamine (MXDA) (manufactured by Mitsubishi Gas Chemical Company, Inc.) and 143.62 g of p-xylylenediamine (PXDA) (manufactured by Mitsubishi Gas Chemical Company, Inc.) (MXDA/PXDA = 70/30 (molar ratio)) and 185.00 g of a polyether diamine (a trade name: JEFFAMINE (registered trademark) XTJ-542, manufactured by Huntsman Corporation, USA; according to the catalog of Huntsman Corporation, USA, in the foregoing general formula (1-1), $-OR^1-$ is $-OCH(CH_3)CH_2-$ or $-OCH_2CH(CH_3)-$, an approximate figure of (x1 + z1) is 6.0, an approximate figure of y1 is 9.0, and an approximate average molecular weight is 1,000) was added dropwise thereto while gradually raising the temperature of the inside of the vessel to 260°C, and the mixture was polymerized for about 2 hours, thereby obtaining a polyether polyamide A1. Incidentally, the physical properties values of the polyether polyamide A1 are as follows.

ηr = 1.45, [COOH] = 55.19 μeq/g, $[NH_2]$ = 70.61 μeq/g, Mn = 15,898, Tg = 50.3°C, Tch = 83.0°C, Tm = 208.1°C.

(Production Example 2) Production of polyether polyamide A2

In a reaction vessel having a capacity of about 3 L and equipped with a stirrer, a nitrogen gas inlet, and a condensed water discharge port, 667.43 g of sebacic acid, 0.6587 g of sodium hypophosphite monohydrate, and 0.4588 g of sodium acetate were charged, and after thoroughly purging the inside of the vessel with nitrogen, the added components were melted at 170°C while further feeding a nitrogen gas at a rate of 20 mL/min into the vessel. A mixed liquid of 283.16 g of m-xylylenediamine (MXDA) (manufactured by Mitsubishi Gas Chemical Company, Inc.) and 121.35 g of p-xylylenediamine (PXDA) (manufactured by Mitsubishi Gas Chemical Company, Inc.) (MXDA/PXDA = 70/30 (molar ratio)) and 330.00 g of a polyether diamine (a trade name: JEFFAMINE (registered trademark) XTJ-542, manufactured by Huntsman Corporation, USA; the details thereof are the same as those described above) was added dropwise thereto while gradually raising the temperature of the inside of the vessel to 260°C, and the mixture was polymerized for about 2 hours, thereby obtaining a polyether polyamide A2. Incidentally, the physical properties values of the polyether polyamide A2 are as follows.

ηr = 1.31, [COOH] = 81.62 μeq/g, $[NH_2]$ = 68.95 μeq/g, Mn = 13,283, Tg = 12.9°C, Tch = 69.5°C, Tm = 204.5°C.

(Production Example 3) Production of polyether polyamide A3

In a reaction vessel having a capacity of about 3 L and equipped with a stirrer, a nitrogen gas inlet, and a condensed water discharge port, 768.55 g of sebacic acid, 0.6644 g of sodium hypophosphite monohydrate, and 0.4628 g of sodium acetate were charged, and after thoroughly purging the inside of the vessel with nitrogen, the added components were melted at 170°C while further feeding a nitrogen gas at a rate of 20 mL/min into the vessel. A mixed liquid of 344.18 g of m-xylylenediamine (MXDA) (manufactured by Mitsubishi Gas Chemical Company, Inc.) and 147.50 g of p-xylylenediamine (PXDA) (manufactured by Mitsubishi Gas Chemical Company, Inc.) (MXDA/PXDA = 70/30 (molar ratio)) and 171.00 g of a polyether diamine (a trade name: JEFFAMINE (registered trademark) ED-900, manufactured by Huntsman Corporation, USA; according to the catalog of Huntsman Corporation, USA, in the foregoing general formula (1-2), $-OR^1-$ is $-OCH(CH_3)CH_2-$ or $-OCH_2CH(CH_3)-$, an approximate figure of (x2 + z2) is 6.0, an approximate figure of y2 is 12.5, and an approximate average molecular weight is 900) was added dropwise thereto while gradually raising the temperature of the inside of the vessel to 260°C, and the mixture was polymerized for about 2 hours, thereby obtaining a polyether polyamide A3. Incidentally, the physical properties values of the polyether polyamide A3 are as follows.

$\eta r$ = 1.48, [COOH] = 66.91 $\mu$eq/g, $[NH_2]$ = 82.80 $\mu$eq/g, Mn = 13,360, Tg = 27.6°C, Tch = 72.8°C, Tm = 207.6°C.

(Production Example 4) Production of polyether polyamide A4

In a reaction vessel having a capacity of about 3 L and equipped with a stirrer, a nitrogen gas inlet, and a condensed water discharge port, 687.65 g of sebacic acid, 0.6612 g of sodium hypophosphite monohydrate, and 0.4605 g of sodium acetate were charged, and after thoroughly purging the inside of the vessel with nitrogen, the added components were melted at 170°C while further feeding a nitrogen gas at a rate of 20 mL/min into the vessel. A mixed liquid of 291.74 g of m-xylylenediamine (MXDA) (manufactured by Mitsubishi Gas Chemical Company, Inc.) and 125.03 g of p-xylylenediamine (PXDA) (manufactured by Mitsubishi Gas Chemical Company, Inc.) (MXDA/PXDA = 70/30 (molar ratio)) and 306.00 g of a polyether diamine (a trade name: JEFFAMINE (registered trademark) ED-900, manufactured by Huntsman Corporation, USA; the details thereof are the same as those described above) was added dropwise thereto while gradually raising the temperature of the inside of the vessel to 260°C, and the mixture was polymerized for about 2 hours, thereby obtaining a polyether polyamide A4. Incidentally, the physical properties values of the polyether polyamide A4 are as follows.

$\eta r$ = 1.36, [COOH] = 66.35 $\mu$eq/g, $[NH_2]$ = 74.13 $\mu$eq/g, Mn = 14,237, Tg = 16.9°C, Tch = 52.9°C, Tm = 201.9°C.

(Production Example 5) Production of polyether polyamide A5

In a reaction vessel having a capacity of about 3 L and equipped with a stirrer, a nitrogen gas inlet, and a condensed water discharge port, 555.37 g of adipic acid, 0.6490 g of sodium hypophosphite monohydrate, and 0.4521 g of sodium acetate were charged, and after thoroughly purging the inside of the vessel with nitrogen, the added components were melted at 170°C while further feeding a nitrogen gas at a rate of 20 mL/min into the vessel. A mixed liquid of 326.06 g of m-xylylenediamine (MXDA) (manufactured by Mitsubishi Gas Chemical Company, Inc.) and 139.74 g of p-xylylenediamine (PXDA) (manufactured by Mitsubishi Gas Chemical Company, Inc.) (MXDA/PXDA = 70/30 (molar ratio)) and 380.00 g of a polyether diamine (a trade name: JEFFAMINE (registered trademark) XTJ-542, manufactured by Huntsman Corporation, USA; the details thereof are the same as those described above) was added dropwise thereto while gradually raising the temperature of the inside of the vessel to 260°C, and the mixture was polymerized for about 2 hours, thereby obtaining a polyether polyamide A5. Incidentally, the physical properties values of the polyether polyamide A5 are as follows.

$\eta r$ = 1.36, [COOH] = 64.82 $\mu$eq/g, $[NH_2]$ = 100.70 $\mu$eq/g, Mn = 12,083, Tg = 79.3°C, Tch = 107.1°C, Tm = 251.4°C.

(Production Example 6) Production of polyether polyamide A6

In a reaction vessel having a capacity of about 3 L and equipped with a stirrer, a nitrogen gas inlet, and a condensed water discharge port, 584.60 g of adipic acid, 0.6626 g of sodium hypophosphite monohydrate, and 0.4616 g of sodium acetate were charged, and after thoroughly purging the inside of the vessel with nitrogen, the added components were melted at 170°C while further feeding a nitrogen gas at a rate of 20 mL/min into the vessel. A mixed liquid of 343.22 g of m-xylylenediamine (MXDA) (manufactured by Mitsubishi Gas Chemical Company, Inc.) and 147.10 g of p-xylylenediamine (PXDA) (manufactured by Mitsubishi Gas Chemical Company, Inc.) (MXDA/PXDA = 70/30 (molar ratio)) and 360.00 g of a polyether diamine (a trade name: JEFFAMINE (registered trademark) ED-900, manufactured by Huntsman Corporation, USA; the details thereof are the same as those described above) was added dropwise thereto while gradually raising the temperature of the inside of the vessel to 260°C, and the mixture was polymerized for about

2 hours, thereby obtaining a polyether polyamide A6. Incidentally, the physical properties values of the polyether polyamide A6 are as follows.

ηr = 1.34, [COOH] = 75.95 μeq/g, [$NH_2$] = 61.83 μeq/g, Mn = 14,516, Tg = 33.2°C, Tch = 73.9°C, Tm = 246.2°C.

(Production Example 7) Production of polyether polyamide A7

In a reaction vessel having a capacity of about 3 L and equipped with a stirrer, a nitrogen gas inlet, and a condensed water discharge port, 584.60 g of adipic acid, 0.6832 g of sodium hypophosphite monohydrate, and 0.4759 g of sodium acetate were charged, and after thoroughly purging the inside of the vessel with nitrogen, the added components were melted at 170°C while further feeding a nitrogen gas at a rate of 20 mL/min into the vessel. A mixed liquid of 490.32 g of m-xylylenediamine (MXDA) (manufactured by Mitsubishi Gas Chemical Company, Inc.) and 400.00 g of a polyether diamine (a trade name: JEFFAMINE (registered trademark) XTJ-542, manufactured by Huntsman Corporation, USA; the details thereof are the same as those described above) was added dropwise thereto while gradually raising the temperature of the inside of the vessel to 260°C, and the mixture was polymerized for about 2 hours, thereby obtaining a polyether polyamide A7. Incidentally, the physical properties values of the polyether polyamide A7 are as follows.

ηr = 1.38, [COOH] = 110.17 μeq/g, [$NH_2$] = 59.57 μeq/g, Mn = 11,783, Tg = 71.7°C, Tch = 108.3°C, Tm = 232.8°C.

(Production Example 8) Production of polyether polyamide A8

In a reaction vessel having a capacity of about 3 L and equipped with a stirrer, a nitrogen gas inlet, and a condensed water discharge port, 584.60 g of adipic acid, 0.6613 g of sodium hypophosphite monohydrate, and 0.4606 g of sodium acetate were charged, and after thoroughly purging the inside of the vessel with nitrogen, the added components were melted at 170°C while further feeding a nitrogen gas at a rate of 20 mL/min into the vessel. A mixed liquid of 489.34 g of m-xylylenediamine (MXDA) (manufactured by Mitsubishi Gas Chemical Company, Inc.) and 359.28 g of a polyether diamine (a trade name: JEFFAMINE (registered trademark) ED-900, manufactured by Huntsman Corporation, USA; the details thereof are the same as those described above) was added dropwise thereto while gradually raising the temperature of the inside of the vessel to 260°C, and the mixture was polymerized for about 2 hours, thereby obtaining a polyether polyamide A8. Incidentally, the physical properties values of the polyether polyamide A8 are as follows.

ηr = 1.35, [COOH] = 73.24 μeq/g, [$NH_2$] = 45.92 μeq/g, Mn = 16,784, Tg = 42.1°C, Tch = 89.7°C, Tm = 227.5°C.

(Production Example 9) Production of polyamide B1

In a reaction vessel having a capacity of about 3 L and equipped with a stirrer, a nitrogen gas inlet, and a condensed water discharge port, 584.5 g of adipic acid, 0.6210 g of sodium hypophosphite monohydrate, and 0.4325 g of sodium acetate were charged, and after thoroughly purging the inside of the vessel with nitrogen, the added components were melted at 170°C while further feeding a nitrogen gas at a rate of 20 mL/min into the vessel. 544.80 g of m-xylylenediamine (MXDA) (manufactured by Mitsubishi Gas Chemical Company, Inc.) was added dropwise thereto while gradually raising the temperature of the inside of the vessel to 260°C, and the mixture was polymerized for about 2 hours, thereby obtaining a polyamide B1. Incidentally, the physical properties values of the polyamide B1 are as follows.

ηr = 2.10, [COOH] = 104.30 μeq/g, [$NH_2$] = 24.58 μeq/g, Mn = 15,500, Tg = 86.1°C, Tch = 153.0°C, Tm = 239.8°C.

(Production Example 10) Production of polyamide B2

In a reaction vessel having a capacity of about 3 L and equipped with a stirrer, a nitrogen gas inlet, and a condensed water discharge port, 829.2 g of sebacic acid, 0.6365 g of sodium hypophosphite monohydrate, and 0.4434 g of sodium acetate were charged, and after thoroughly purging the inside of the vessel with nitrogen, the added components were melted at 170°C while further feeding a nitrogen gas at a rate of 20 mL/min into the vessel. A mixed liquid of 390.89 g of m-xylylenediamine (MXDA) (manufactured by Mitsubishi Gas Chemical Company, Inc.) and 167.53 g of p-xylylenediamine (PXDA) (manufactured by Mitsubishi Gas Chemical Company, Inc.) (MXDA/PXDA= 70/30 (molar ratio)) was added dropwise thereto while gradually raising the temperature of the inside of the vessel to 260°C, and the mixture was polymerized for about 2 hours, thereby obtaining a polyamide B2. Incidentally, the physical properties values of the polyamide B2 are as follows.

ηr = 2.20, [COOH] = 81.8 μeq/g, [$NH_2$] = 26.9 μeq/g, Mn = 18,400, Tg = 65.9°C, Tch = 100.1°C, Tm = 213.8°C.

(Production Example 11) Production of polyether polyamide B3

In a reaction vessel having a capacity of about 3 L and equipped with a stirrer, a nitrogen gas inlet, and a

condensed water discharge port, 753.66 g of 12-aminolauric acid (manufactured by Tokyo Chemical Industry Co., Ltd.), 56.84 g of adipic acid, 0.5798 g of sodium hypophosphite monohydrate, and 0.4038 g of sodium acetate were charged, and after thoroughly purging the inside of the vessel with nitrogen, the added components were melted at 170°C while further feeding a nitrogen gas at a rate of 20 mL/min into the vessel. 388.89 g of a polyether diamine (a trade name: JEFFAMINE (registered trademark) XTJ-542, manufactured by Huntsman Corporation, USA; the details thereof are the same as those described above) was added dropwise thereto while gradually raising the temperature of the inside of the vessel to 240°C, and the mixture was polymerized for about 2 hours, thereby obtaining a polyether polyamide B3. Incidentally, the physical properties values of the polyether polyamide B3 are as follows.

$\eta r$ = 1.25, [COOH] = 87.27 μeq/g, [$NH_2$] = 73.12 μeq/g, Mn = 12,470, Tm = 165.0°C. Tg and Tch were not observed.

(Examples 1 to 8 and Comparative Examples 1 to 3)

A resin composition composed of each of the polyether polyamides or polyamides produced in the foregoing Production Examples 1 to 11 of the types shown in Table 1 was used and subjected to extrusion molding at ((melting point Tm of the polyether polyamide or polyamide) + 20°C) to ((melting point Tm) + 30°C), thereby fabricating a film-shaped molded body having a thickness of 100 μm as a test piece for evaluating the following physical properties.

Similarly, a resin composition composed of each of the polyether polyamides or polyamides produced in the foregoing Production Examples 1 to 11 was used and subjected to injection molding at (melting point Tm of the polyether polyamide or polyamide) + 20°C) to ((melting point Tm) + 30°C), thereby fabricating a test piece having a thickness of 4 mm, respectively.

The fabricated test piece was evaluated for each of physical properties by the following methods. Evaluation results are shown in Table 1. Incidentally, in the following evaluation tests, the evaluation of physical properties obtained by using the test piece can be considered as physical properties of an inner liner for pneumatic tire.

(1) Evaluation of bending elastic modulus

Using a thermostat-equipped tester (5960 Dual Column Tabletop Model Testing System, manufactured by Instron), the fabricated 4 mm-thick test piece was measured for a bending elastic modulus (unit: MPa) at -30°C, 30°C, and 120°C, respectively in conformity with ISO 178.

(2) Evaluation of pinhole resistance

The fabricated 100 μm-thick test piece was stretched two times in the machine direction and two times in the transverse direction by using a batch-type simultaneous biaxial stretching machine and subjected to a thermal fixing treatment at 210°C, thereby fabricating a stretched film having a thickness of 25 μm. Using a Gelvo type flex-cracking tester (manufactured by Rigaku Kogyo K.K.), the stretched film was bent in an environment at 23°C and 60% RH (relative humidity) while setting the axis direction of the Gelvo type flex-cracking tester as the measuring direction, and the number of pinholes per unit area (210 mm square) at the time of bending of 1,000 times was measured. The measurement of pinholes was carried out using a pinhole tester (slight current discharge method). When the number of pinholes is smaller, the breakage or generation of a crack due to deformation is more hardly caused at the time of bending, and therefore, the resultant is suitable as an inner liner for pneumatic tire.

(3) Tensile test (rate of tensile elongation at break)

The test was carried out in conformity with JIS K-7161. The fabricated 100 μm-thick test piece was cut out in a size of 10 mm x 100 mm, and the tensile test was carried out using a strograph, manufactured by Toyo Seiki Seisaku-sho, Ltd. under conditions at a measurement temperature of 23°C and a humidity of 50% RH in a chuck-to-chuck distance to 50 mm at a tensile rate of 50 mm/min, thereby determining the rate of tensile elongation at break.

(4) Gas barrier properties

The gas barrier properties were measured in conformity with ASTM D3985. Specifically, using an oxygen transmission rate measuring apparatus (a trade name: "OX-TRAN 2/21A", manufactured by Mocon, Inc.), the fabricated 100 μm-thick test piece was measured for an oxygen transmission coefficient (unit: mL·mm/$m^2$·day·atm) in an environment at 23°C and 60% RH (relative humidity).

Table 1

| | | | Example | | | | | | | | Comparative Example | | |
|---|---|---|---|---|---|---|---|---|---|---|---|---|---|
| | | | 1 | 2 | 3 | 4 | 5 | 6 | 7 | 8 | 1 | 2 | 3 |
| | | | A1 | A2 | A3 | A4 | A5 | A6 | A7 | A8 | B1 | B2 | B3 |
| Polyether polyamide for mulation | | | | | | | | | | | | | |
| Diamine (molar ratio) | (a-1) | XTJ-542 | 5 | 10 | 0 | 0 | 10 | 0 | 10 | 0 | - | - | 10 |
| | | ED-900 | 0 | 0 | 5 | 10 | 0 | 10 | 0 | 10 | - | - | - |
| | (a-2) | Xylylenediamine | 95 | 90 | 95 | 90 | 90 | 90 | 90 | 90 | 100 | 100 | - |
| | | (MXDA/PXDA molar ratio) | (70/30) | (70/30) | (70/30) | (70/30) | (70/30) | (70/30) | (100/0) | (100/0) | (100/0) | (70/30) | - |
| Carboxylic acid (molar ratio) | (a-3) | Adipic acid | 0 | 0 | 0 | 0 | 100 | 100 | 100 | 100 | 100 | - | 10 |
| | | Sebacic acid | 100 | 100 | 100 | 100 | 0 | 0 | 0 | 0 | - | 100 | - |
| | | 12-Aminolauric acid | - | - | - | - | - | - | - | - | - | - | 90 |
| Melting point (°C) | | | 208.1 | 204.5 | 207.6 | 201.9 | 251.4 | 246.2 | 232.8 | 227.5 | 239.8 | 213.8 | 165.0 |
| Evaluation results | | | | | | | | | | | | | |
| Bending elastic modulus (MPa) | At the time of low temperature (-30°C) | | 2630 | 1850 | 2960 | 2050 | 3100 | 2780 | 2650 | 2530 | 4960 (*) | 3230 (*) | 820 |
| | Room temperature (30°C) | | 1030 | 480 | 740 | 440 | 1140 | 400 | 1010 | 360 | 4640 | 2960 | 250 |
| | At the time of high temperature (120°C) | | 260 | 120 | 250 | 180 | 300 | 210 | 260 | 190 | 400 | 320 | 80 |
| Pinhole resistance (after bending of 1,000 times, number of pinholes) | | | 0 | 0 | 0 | 0 | 0 | 0 | 0 | 0 | 20< | 8 | 0 |
| Rate of tensile elongation at break (%) | | | 418 | 359 | 387 | 393 | 558 | 304 | 429 | 341 | 2.9 | 3.4 | 513 |

(continued)

| | | | | | | | | | | | | |
|---|---|---|---|---|---|---|---|---|---|---|---|---|
| Evaluation results | | | | | | | | | | | | |
| | Oxygen transmission coefficient at 23°C and 60% RH ($cc/m^2 \cdot day \cdot atm$) | 3.59 | 17.06 | 4.00 | 12.35 | 0.70 | 6.36 | 0.77 | 6.17 | 0.08 | 2.01 | (**) |

MXDA: m-Xylylenediamine
PXDA: p-Xylylenediamine
XTJ-542: Polyether diamine (manufactured by Huntsman Corporation)
ED-900: Polyether diamine (manufactured by Huntsman Corporation)
*: The test piece was broken.
**: In the measurement in the environment at 23°C and 60% RH, the value overranged, so that it became impossible to carry out the measurement.

As shown in Table 1, in Examples 1 to 8, the bending properties at a low temperature (-30°C), room temperature (30°C), and a high temperature (120°C) were excellent, and the gas barrier properties were favorable. For that reason, in the case of using the resin compositions of Examples 1 to 8 as an inner liner for pneumatic tire, it is considered that the durability of the pneumatic tire may also be enhanced.

On the other hand, in Comparative Examples 1 and 2, the breakage was generated during the measurement test of bending elastic modulus at the time of low temperature, resulting in inferior bending properties at a low temperature.

Furthermore, in Comparative Example 3, the value of the bending elastic modulus at the time of high temperature is low, so that there is involved such a problem that when used at a high temperature, the mechanical strength is lowered. In addition, in the test of gas barrier properties, the oxygen transmission amount was excessively large and overranged, so that it became impossible to carry out the measurement, resulting in inferior gas barrier properties.

Reference Signs List

1: Bead core
2: Carcass
3: Inner liner
4: Belt layer
5: Tread part
6: Sidewall part
7: Pneumatic tire

## Claims

1. An inner liner for pneumatic tire, the inner liner being prepared by molding a resin composition comprising a polyether polyamide (A) in which a diamine constituent unit thereof comprises constituent units derived from a polyether diamine compound (a-1) represented by the following general formula (1) and a xylylenediamine (a-2), and a dicarboxylic acid constituent unit thereof comprises a constituent unit derived from an $\alpha,\omega$-linear aliphatic dicarboxylic acid (a-3) having from 4 to 20 carbon atoms:

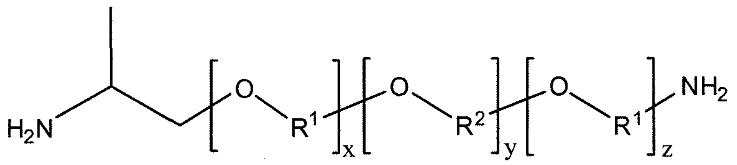
(1)

wherein (x + z) represents 1 to 60; y represents 1 to 50; each $-OR^1-$ independently represents $-OCH_2CH_2CH_2-$, $-OCH(CH_3)CH_2-$, or $-OCH_2CH(CH_3)-$; and $-OR^2-$represents $-OCH_2CH_2CH_2CH_2-$ or $-OCH_2CH_2-$.

2. The inner liner for pneumatic tire according to claim 1, wherein a thickness of the inner liner for pneumatic tire is 10 to 1,000 $\mu$m.

3. The inner liner for pneumatic tire according to claim 1 or 2, wherein a proportion of the constituent unit derived from the polyether diamine compound (a-1) in the diamine constituent unit of the polyether polyamide (A) is 1 to 50% by mole.

4. The inner liner for pneumatic tire according to any one of claims 1 to 3, wherein the xylylenediamine (a-2) is m-xylylenediamine, p-xylylenediamine, or a mixture thereof.

5. The inner liner for pneumatic tire according to any one of claims 1 to 4, wherein the $\alpha,\omega$-linear aliphatic dicarboxylic acid (a-3) is adipic acid, sebacic acid, or a mixture thereof.

Fig.1

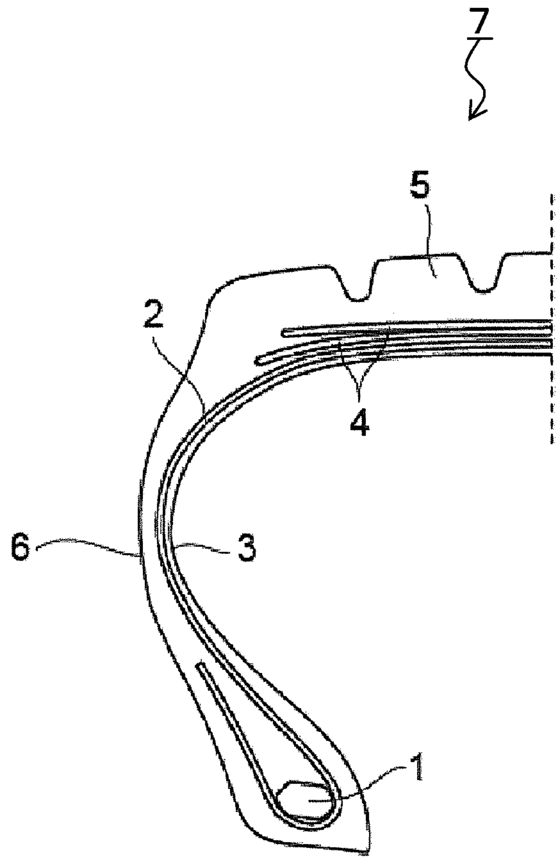

**INTERNATIONAL SEARCH REPORT**

International application No.
PCT/JP2014/058683

A. CLASSIFICATION OF SUBJECT MATTER
*C08G69/40*(2006.01)i, *B60C5/14*(2006.01)i

According to International Patent Classification (IPC) or to both national classification and IPC

B. FIELDS SEARCHED

Minimum documentation searched (classification system followed by classification symbols)
C08G69, B60C5/14, C08L

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2014 |
| Kokai Jitsuyo Shinan Koho | 1971-2014 | Toroku Jitsuyo Shinan Koho | 1994-2014 |

Electronic data base consulted during the international search (name of data base and, where practicable, search terms used)
CAplus/REGISTRY(STN)

C. DOCUMENTS CONSIDERED TO BE RELEVANT

| Category* | Citation of document, with indication, where appropriate, of the relevant passages | Relevant to claim No. |
|---|---|---|
| Y | JP 2009-291962 A (Ube Industries, Ltd.), 17 December 2009 (17.12.2009), claims; paragraphs [0055], [0083], [0084] (Family: none) | 1-5 |
| Y | JP 2009-255489 A (Ube Industries, Ltd.), 05 November 2009 (05.11.2009), claims; paragraphs [0058], [0073], [0074] (Family: none) | 1-5 |
| Y | JP 7-149108 A (Sumitomo Rubber Industries, Ltd.), 13 June 1995 (13.06.1995), claims; paragraphs [0001], [0007] (Family: none) | 1-5 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 12 June, 2014 (12.06.14) | 01 July, 2014 (01.07.14) |
| Name and mailing address of the ISA/ Japanese Patent Office | Authorized officer |
| Facsimile No. | Telephone No. |

Form PCT/ISA/210 (second sheet) (July 2009)

INTERNATIONAL SEARCH REPORT

International application No. PCT/JP2014/058683

C (Continuation). DOCUMENTS CONSIDERED TO BE RELEVANT

| Category* | Citation of document, with indication, where appropriate, of the relevant passages | Relevant to claim No. |
|---|---|---|
| Y | WO 2009/116308 A1 (The Yokohama Rubber Co., Ltd.), 24 September 2009 (24.09.2009), claims & JP 4376316 B & US 2011/0011507 A1 & EP 2255978 A1 & CN 101977781 A | 1-5 |
| Y | JP 49-110744 A (Toyobo Co., Ltd.), 22 October 1974 (22.10.1974), claims; page 4, upper left column, lines 10 to 15; examples & GB 1449315 A & DE 2405646 A1 & FR 2216316 A | 1-5 |
| Y | WO 2011/122876 A1 (Koron Industries Inc.), 06 October 2011 (06.10.2011), entire text & JP 2013-528666 A & US 2013/0059142 A1 & EP 2554575 A2 & CN 102933643 A | 1-5 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP H640207 A